# EUROPÄISCHE PATENTSCHRIFT

(11) **EP 1 116 162 B1**
(45) Veröffentlichungstag und Bekanntmachung des Hinweises auf die Patenterteilung: **04.12.2002**
(21) Anmeldenummer: 99969518.2
(22) Anmeldetag: 21.09.1999
(51) Int. Cl.: G06K 7/10

(54) **VERFAHREN ZUM LESEN EINES BARCODES**
METHOD FOR READING A BAR CODE
PROCEDE DE LECTURE D'UN CODE A BARRES

(30) Priorität: 24.09.1998 DE 19843688
(43) Veröffentlichungstag der Anmeldung: 18.07.2001
(73) Patentinhaber: WST Steuerungstechnik GmbH, 32339 Espelkamp (DE)
(72) Erfinder: WELLPOTT, Rolf, D-32369 Rahden (DE)
(74) Vertreter: Braun, Dieter, Dipl.-Ing.
(86) Internationale Anmeldenummer: DE9903012
(87) Internationale Veröffentlichungsnummer: WO00017807

(56) Entgegenhaltungen:
- US-A- 4 916 298
- US-A- 5 384 452
- US-A- 5 457 308
- US-A- 5 635 699

## Beschreibung

Die Erfindung bezieht sich auf ein Verfahren zum Lesen eines Barcodes nach dem Oberbegriff des Anspruchs 1.

Bekannte Barcode-Leser tasten in der Regel den Strichcode einzeilig ab und müssen in einem Durchlauf den kompletten Code gelesen haben. Deshalb kommt es zu Problemen, wenn der Barcode eine sehr geringe Höhe von z. B. nur 2 mm aufweist. Insbesondere in diesem Fall ist es möglich, daß der Barcode während eines Durchlaufs aus der Lesespur läuft. Bekannt ist es weiterhin, einen Scanner einzusetzen, der die Spur so lange abscannt, bis er einen kompletten Barcode erfaßt hat. Dieser Vorgang erfordert jedoch Zeit, die z. B. beim Bedrucken, d. h. beim Identifizieren von schnell vorbeischießenden Druckbögen in einer Zusammentrageinrichtung, nicht zur Verfügung steht. Durch den Einsatz eines Scanners kann zwar die Ablese-Sicherheit erhöht werden, auch hier ist jedoch der Lesevorgang problematisch. sofern der Barcode schräg liegt. In diesem Fall wird die Information möglicherweise überhaupt nicht gelesen.

Die Patentschrift US-A 5 635 699 grenzt den Stand der Technik ab und definiert die Präambel des unabhängigen Anspruches. Durch die Patentschrift ist bereits ein Verfahren bekannt, bei dem zunächst ein zweidimensionales Datenfeld erfaßt wird, was beispielsweise auch durch die Querbewegung eines eindimensionalen Sensors erreicht werden kann. Entsprechend der Abmessungen des Barcode-Labels werden dann virtuelle Lesespuren bestimmt und die so erfassten Signale gespeichert. Hierzu wird zunächst eine Starterkennung des Barcodes erfasst, um daraus ein Zeitraster zu errechnen, in das alle weiteren Signale passen müssen, sofern diese für die anschließende Dekodierung des Barcodes relevant sein sollen. Dabei werden die Signale spurenübergreifend dekodiert, indem ein Übergang zu der nächsten Lesespur stattfindet, wenn in der momentanen Lesespur keine gültigen Signale mehr registriert werden.

In dem US-Patent 5 457 308 ist ein Verfahren zum Lesen eines Barcodes beschrieben, bei dem mehrere Lesespuren erzeugt und nach vollständigem Durchlauf des Barcodes ausgewertet werden, wobei eine Lesespur mit einer Startkennung und eine Lesespur mit einer Endkennung bestimmt wird. Dabei wird aus der Startkennung ein Zeitraster errechnet, in das alle Signale nach der Startkennung passen müssen, um für die Dekodierung des Barcodes relevant zu sein. Nach Erfassung einer Endkennung des Barcodes wird der Barcode verfolgt, indem eine Lesespur, die die Startkennung aufweist und eine weitere Lesespur, die die Endkennung aufweist, herangezogen werden, um den Barcode auszuwerten.

Nachteilig bei diesem bekannten Verfahren ist, daß nur die genannten zwei Lesespuren, nämlich eine die Startkennung und eine die Endkennung aufweisende Lesespur, zur eigentlichen Auswertung des Barcodes herangezogen werden. Denn dies setzt voraus, daß die Lesespuren in einem solchen Winkel zu dem Barcode verlaufen, daß der gesamte Barcode von höchstens zwei Lesespuren komplett überstrichen wird. Ein weiterer Nachteil ist, daß die beiden Lesespuren zuerst für sich dekodiert werden und dann die Einzelergebnisse der beiden Lesespuren zu dem Gesamtergebnis zusammengesetzt werden. Das bedeutet, daß der Barcode dann nicht gelesen werden kann, wenn die beiden Lesespuren sich nur in einem Barcode-Segment überlappen, das für sich noch keine Zahl kodiert. So kann selbst ein in den beiden Spuren komplett erfaßter Barcode nicht ausgewertet werden, wenn der Code einer Ziffer beispielsweise zum Teil in der ersten und zum Teil in der zweiten Spur enthalten ist.

Aus dem US-Patent 4 289 957 ist ein gattungsgemäßes Verfahren bekannt. Bei diesem Verfahren werden für die Dekodierung zwei Lesespuren herangezogen, wobei jedoch die Einschränkung besteht, daß die obere und die untere Hälfte der Barcode-Information komplett in jeweils einer der beiden Lesespuren enthalten sein muß. Das schließt insbesondere aus, daß ein Barcode gelesen werden kann, wenn der Code einer einzelnen Ziffer nicht vollständig in einer der Lesespuren enthalten ist.

Der Erfindung liegt die Aufgabe zugrunde, ein gattungsgemäßes Verfahren zur Verfügung zu stellen, bei dem der Aufwand zur Auswertung des Barcodes wesentlich verringert werden kann.

Diese Aufgabe wird erfindungsgemäß durch die Merkmale des Anspruchs 1 gelöst. Die weitere Ausgestaltung ist den Unteransprüchen zu entnehmen.

Dadurch, daß die Auswertung der Signale unmittelbar ohne Zwischenspeicherung durchgeführt wird, lässt sich der Aufwand zum Lesen des Barcodes wesentlich reduzieren, indem auf eine vorhergehende Speicherung der Signale verzichtet wird. Dabei ist es insbesondere nicht erforderlich, aus den erfassten Signalen zunächst mittels des Rechners ein zweidimensionales Datenfeld und daraus dann virtuelle Lesespuren zu bestimmen. Der Lesevorgang kann dadurch beschleunigt werden, wobei marktübliche Bauelemente eingesetzt werden können, die sich vor allem durch eine einfache Handhabung und gute Verfügbarkeit auszeichnen.

Dabei ist vorzugsweise vorgesehen, daß ein Übergang von einer Lesespur auf die nächste Lesespur auch dann durchgeführt wird, wenn eine Signalüberlappung der Signale der beiden Lesespuren vorliegt, also daß ein Übergang unabhängig davon stattfindet, ob in der momentanen Lesespur die den kompletten Barcode repräsentierenden Signale enthalten sind. Die Länge der Überlappung ist bei dieser Ausführungsform des Verfahrens vorgegeben und kann beispielsweise in einem einzigen Signal bestehen.

Es kann alternativ auch vorgesehen sein, daß ein Übergang zu der nächsten Lesespur nur dann stattfindet, wenn in der momentanen Lesespur keine gültigen Signale mehr registriert werden. In solch einem Fall würden beispielsweise, wenn in der ersten Lesespur die den kompletten Barcode repräsentierenden Signale enthalten sind, lediglich die Signale dieser Lesespur unmittelbar für die Dekodierung herangezogen.

Femer kann vorgesehen sein, daß durch die Bildung einer Prüfsumme die dekodierte Information kontrolliert und bei nicht vorhandener Übereinstimmung eine oder mehrere benachbarte Lesespuren abgesucht werden und daß, wenn sich dann keine korrekte Prüfsumme ergeben hat, mit der Suche einer neuen Startkennung begonnen wird, wobei die Suche an der Stelle, wo der Anfang der letzten vermeintlichen Kennung liegt, beginnt. Alternativ zu einer Prüfsumme kann auch vorgesehen sein, daß mit der Suche der neuen Startkennung begonnen wird, wenn der Rechner nach dem Durchlauf keine gültigen Barcode-Informationen erhalten hat.

Es wird also erreicht, daß über den Rechner auch Bruchstückinformationen der einzelnen Leseköpfe zusammengefaßt werden. Die Auswertung rekonstruiert den kompletten Barcode. Es ergibt sich die Möglichkeit, die Höhe des Barcodes auf 1 bis 2 mm zu reduzieren, wobei es auf einen geraden Durchlauf des Codes nicht ankommt, d. h., daß z. B. Druckbögen durchaus auch verkantet durch den Mehrspur-Leser laufen können. Aus der geringen Modulhöhe des Barcodes ergibt sich z. B. bei den mit einer Kodierung versehenen Seiten eines Buches ein geringer Verschnitt und somit ein erheblicher Kostenvorteil. Der Mehrspur-Leser ist dabei in jeder Station der Zusammentrageinrichtung der Seiten des Buches, etc., angeordnet.

Es kann vorgesehen sein, daß die Anzahl der Signale, die insgesamt für das Lesen eines bestimmten Barcodes herangezogen werden, dadurch definiert wird, daß eine Endkennung dekodiert und somit registriert wird. Altemativ kann auch vorgesehen sein, daß diese genannte Anzahl von Signalen in dem Moment festgelegt ist, in dem die Dekodierung einer vorgegebenen Anzahl von Ziffern erfolgt ist.

Vorteilhaft ist es, wenn das Zeitraster mit der Erfassung der Startkennung jeweils neu festgelegt wird; das Zeitraster ist dabei abhängig von der Durchlaufgeschwindigkeit des Barcodes. Es ist so ein sicheres Lesen des Barcodes auch bei wechselnden Durchlaufgeschwindigkeiten des Barcodes an den Leseköpfen gewährleistet.

Vorteilhaft ist es weiterhin, daß gemäß dem erfindungsgemäßen Verfahren bei der Auswertung durch den Rechner der komplette Barcode rekonstruiert wird und Randinformationen, wie Buchstaben und Bilder, die neben oder vor dem Barcode liegen, herausgefiltert werden.

Ein Ausführungsbeispiel der Erfindung ist in der Zeichnung dargestellt und wird im folgenden näher beschrieben. Es zeigen:
Figur 1, die Darstellung eines Lesevorganges mit einem aus mehreren nebeneinander angeordneten Leseköpfen bestehenden Mehrspur-Leser;
Figur 2, den in die Lesespuren eingelesenen Barcode gem. Fig. 1.

In der Zeichnung ist mit 1 ein Barcode bezeichnet, der auf einer in der Zeichnung nicht dargestellten Seite, z. B. eines Buches, angebracht ist. Im Bereich des Barcodes 1 sind mehrere Leseköpfe 2 quer zur durch einen Pfeil gekennzeichneten Laufrichtung des Barcodes 1 angeordnet. Von den Leseköpfen 2 sind Leitungen 3 an einen Rechner 4 geführt Die Leseköpfe 2 erfassen den Barcode 1 im Bereich von Lesespuren 5, 6, 7 und 8.

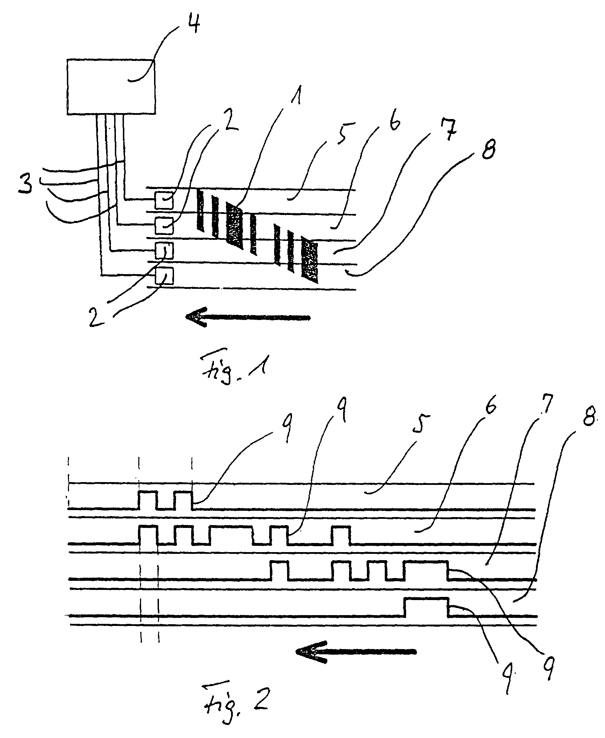

In der Figur 2 ist der in die Lesespuren 5, 6, 7 und 8 eingelesene Barcode der Figur 1 dargestellt. Die Lesespuren 5, 6, 7 und 8 enthalten Signale 9, entsprechend dem Barcode 1. Zum Lesen des Barcodes 1 wird dieser an den quer zur Laufrichtung nebeneinander angeordneten Leseköpfen 2 vorbeibewegt. Die Leseköpfe 2 erfassen im Bereich der Lesespuren 5, 6, 7 und 8 die Signale 9 des Barcodes 1. Von den Leseköpfen 2 werden die Signale 9 über die Leitungen 3 an den Rechner 4 weitergeleitet. Die Signale 9 der Leseköpfe 2 werden grundsätzlich unmittelbar bei ihrer Erfassung ausgewertet, d. h. auch dekodiert. Der Rechner 4 sucht und erfaßt als erstes eine Startkennung des Barcodes 1 und errechnet aus der Startkennung ein Zeitraster, wobei alle weiteren Signale in dieses Zeitraster passen müssen, um für die Dekodierung des Barcodes relevant zu sein.

Anschließend werden vom Rechner 4, ausgehend von der die ersten beiden Signale 9 umfassenden Startkennung, die Signale der Lesespur 6 weiterverfolgt, da in Lesespur 5 keine weiteren Signale folgen. Der Rechner erkennt, wenn gleiche Werte in der nächsten Lesespur auftreten. Bei Registrierung einer Überlappung in einem Signal, wie dies hier bei den Lesespuren 6 und 7 der Fall ist, verfolgt er die Signale in der nächsten Lesespur, also der Lesespur 7, zur Dekodierung weiter. Schließlich gelangt der Rechner in der Auswertung auch zu dem die Endkennung darstellenden Signal 9 in Lesespur 8, da dieses Signal sowohl in Lesespur 7 als auch in Lesespur 8 enthalten ist, und beendet die Dekodierungsauswertung.

Dann wird durch die Bildung einer Prüfsumme die dekodierte Information kontrolliert. Bei nicht vorhandener Übereinstimmung geht der Rechner wieder an den letzten Verzweigungspunkt zurück. Er verfolgt dann die Signale in der Lesespur, aus der vorher verzweigt wurde, solange wie eine Übereinstimmung mit Signalen der nächsten Lesespur vorliegt. Wenn diese Übereinstimmung endet, verzweigt der Rechner den Lesevorgang wiederum in die nächste Lesespur.

Sofern sich dann keine korrekte Prüfsumme ergeben hat, beginnt der Rechner 4 mit der Suche einer neuen Startkennung bzw. Endkennung, wobei die Suche an der Stelle, wo der Anfang der letzten vermeintlichen Kennung liegt, anfängt.

Der Rechner verzweigt also seinen Lesevorgang immer dann, wenn eine Überschneidung von Signalen in benachbarten Lesespuren auftritt. Dies hat den Vorteil, daß, wenn nach Erreichen der Endkennung die Prüfsumme fehlerhaft ist, der Rechner wieder an einen Verzweigungspunkt, der einen ausgezeichneten Punkt innerhalb des Leseverfahrens darstellt, zurückgehen kann. Außerdem verzweigt der Rechner seinen Lesevorgang, wenn in der momentanen Lesespur keine gültigen Signale mehr registriert werden.

Gemäß dem erfindungsgemäßen Verfahren wird bei der Auswertung durch den Rechner der komplette Barcode rekonstruiert, so daß Randinformationen, wie Buchstaben und Bilder, die neben oder vor dem Barcode liegen, herausgefiltert werden. Das Verfahren ist insbesondere dann vorteilhaft einsetzbar, wenn in einer Zusammentrageinrichtung für bedruckte Bögen, z. B. für die Seiten eines Buches, der Inhalt einer Seite mit herkömmlichen Mitteln nicht auswertbar ist. Dieses ist z. B. dann der Fall, sofern die Seiten einen sehr ähnlichen Aufbau bzw. Bildinhalt haben. Zur sicheren Identifizierung muß dann auf die Bögen ein Barcode angebracht werden. Da jedoch der mit dem Barcode versehene Bereich der Bögen nach dem Zusammentragen abgeschnitten werden muß, ist es von Vorteil, wenn der Barcode eine möglichst geringe Höhe hat. Es ergibt sich dann ein geringer Verschnitt und somit ein erheblicher Kostenvorteil.

## Patentansprüche

1. Verfahren zum Lesen eines Barcodes (1), bei dem im Bereich des Barcodes (1) mehrere Leseköpfe (2) quer zur Laufrichtung nebeneinander angeordnet sind, den Leseköpfen (2) ein Rechner (4) nachgeschaltet ist, die Signale (9) der Leseköpfe (2) als Lesespuren (5, 6, 7, 8) vom Rechner (4) ausgewertet werden, der Rechner (4) als erstes eine Startkennung des Barcodes (1) sucht und erfaßt und sich aus der Startkennung ein Zeitraster errechnet, wobei alle weiteren Signale in dieses Zeitraster passen müssen, um für die sich anschließende Dekodierung des Barcodes relevant zu sein, und ferner ausgehend von der Startkennung vom Rechner (4) der Barcode (1) verfolgt wird, wobei auch die möglichen Übergänge zu benachbarten Lesespuren (5, 6, 7, 8) geprüft werden und die Signale (9) spurenübergreifend dekodiert werden können, indem ein Übergang zu der nächsten Lesespur stattfindet, wenn in der momentanen Lesespur keine gültigen Signale mehr registriert werden, durch folgende Schritte **gekennzeichnet,**
- es wird die aktuelle Lesespur bestimmt, die die Startkennung liefert und die Signale dieser aktuellen Lesespur werden unmittelbar dekodiert;
- liefert eine Lesespur, die der jeweils aktuellen Lesespur direkt benachbart ist, ein gleiches Signal wie die aktuelle Lesespur, so wird die laufende Dekodierung auf dieser benachbarten Lesespur fortgesetzt, die damit zur aktuellen Lesespur wird.

2. Verfahren nach Anspruch 1, **dadurch gekennzeichnet, daß** ein Übergang von einer Lesespur (6) auf die nächste Lesespur (7) durchgeführt wird, wenn eine Signalüberlappung der Signale (9) der beiden Lesespuren (6, 7) vorliegt.

3. Verfahren nach Anspruch 1 oder 2, **dadurch gekennzeichnet, daß** durch die Bildung einer Prüfsumme die dekodierte Information kontrolliert und bei nicht vorhandener Übereinstimmung eine benachbarte Lesespur (5, 6, 7 oder 8) abgesucht wird und, wenn sich dann keine korrekte Prüfsumme ergeben hat, mit der Suche einer neuen Startkennung begonnen wird, wobei die Suche an der Stelle, wo der Anfang der letzten vermeintlichen Kennung liegt, beginnt.

4. Verfahren nach einem der vorhergehenden Ansprüche, **dadurch gekennzeichnet, daß** die Anzahl der für den Barcode (1) auszuwertenden Signale (9) durch die Registrierung einer Endkennung festgelegt wird.

5. Verfahren nach einem der Ansprüche 1 bis 3, **dadurch gekennzeichnet, daß** die Anzahl der für den Barcode (1) auszuwertenden Signale (9) durch die erfolgte Dekodierung einer vorgegebenen Anzahl von Ziffern festgelegt wird.

6. Verfahren nach einem der vorhergehenden Ansprüche, **dadurch gekennzeichnet, daß** das Zeitraster mit der Erfassung der Startkennung jeweils neu festgelegt wird, wobei das Zeitraster abhängig ist von der Durchlaufgeschwindigkeit des Barcodes (1).

7. Verfahren nach einem der vorhergehenden Ansprüche, **dadurch gekennzeichnet, daß** die Auswertung durch den Rechner (4) den kompletten Barcode (1) rekonstruiert und Randinformationen, wie Buchstaben und Bilder, die neben oder vor dem Barcode (1) liegen, herausfiltert.

## Claims

1. Method for reading a bar code (1) in which a plurality of reading heads (2) are arranged side by side transversely to the direction of travel in the region of the bar code (1), a computer (4) being connected downstream of the reading heads (2), the signals (9) of the reading heads (2) being evaluated as reading tracks (5, 6, 7, 8) by the computer (4), the computer (4) firstly searching for and detecting a start identification character of the bar code (1) and computing a time grid from the start identification character, wherein all further signals have to fit into this time grid in order to be relevant to the subsequent decoding of the bar code and the bar code (1) is also traced, starting from the start identification character, by the computer (4), wherein the possible transitions to the adjacent reading tracks (5, 6, 7, 8) can be checked and the signals (9) decoded for all tracks, in that there is a transition to the next reading track when valid signals are no longer registered in the instantaneous reading track, **characterised by** the following steps
- the current reading track which supplies the start identification character is determined and the signals of this current reading track are decoded immediately;
- if a reading track, which is directly adjacent to the respective current reading track, supplies a signal identical to the current reading track the serial decoding is continued on this adjacent reading track which thus becomes the current reading track.

2. Method according to claim 1, **characterised in that** a transition is made from one reading track (6) to the next reading track (7) if there is signal overlap between the signals (9) of the two reading tracks (6, 7).

3. Method according to claim 1 or 2, **characterised in that** the decoded information is checked by the formation of a check sum and in the event of nonconformity an adjacent reading track (5, 6, 7 or 8) is scanned and if there is still no correct check sum the search is begun for a new start identification character, the search being begun at the point where the last supposed identification character started.

4. Method according to any of the preceding claims, **characterised in that** the number of signals (9) to be evaluated for the bar code (1) is determined by registering an end identification character.

5. Method according to any of claims 1 to 3, **characterised in that** the number of signals (9) to be evaluated for the bar code (1) is determined by the successful decoding of a predetermined number of digits.

6. Method according to any of the preceding claims, **characterised in that** the time grid is re-established upon detection of the respective start identification character, the time grid being dependent on the speed of passage of the bar code (1).

7. Method according to any of the preceding claims, **characterised in that** the evaluation by the computer (4) reconstructs the complete bar code (1) and filters out peripheral information, such as letters and images, located next to or in front of the bar code (1).

## Revendications

1. Procédé de lecture d'un code à barres (1) dans lequel, dans la zone du code à barres (1), plusieurs têtes de lecture (2) sont disposées l'une à côté de l'autre, transversalement au sens de balayage, dans lequel un calculateur (4) est monté en aval des têtes de lecture (2), dans lequel les signaux (9) des têtes de lecture (2) sont analysés par le calculateur (4) comme pistes de lecture (5, 6, 7, 8), dans lequel le calculateur (4) cherche et enregistre en premier un identifiant de début du code à barres (1) et dans lequel un système à tranches de temps est calculé à partir de l'identifiant de début, tous les autres signaux devant s'insérer dans ce système à tranches de temps afin d'être pertinents pour le décodage successif du code à barres, et le code à barres (1) étant en outre suivi par le calculateur (4) à partir de l'identifiant de début, les transitions possibles avec les pistes de lecture (5, 6, 7, 8) adjacentes étant également vérifiées et les signaux (9) pouvant être décodés par chevauchement des pistes dans la mesure où une transition avec la piste de lecture suivante a lieu quand la piste de lecture actuelle ne présente plus d'enregistrement de signaux valides, **caractérisé par** les étapes suivantes,
- la piste de lecture qui délivre l'identifiant de début, est désignée comme piste de lecture actuelle et les signaux de cette piste de lecture actuelle sont décodés directement ;
- si une piste de lecture qui est directement adjacente à la piste de lecture actuelle, délivre un signal identique à celui de la piste de lecture actuelle, le décodage en cours est poursuivi sur cette piste de lecture adjacente qui devient ainsi la piste de lecture actuelle.

2. Procédé selon la revendication 1, **caractérisé en ce qu'**une transition d'une piste de lecture (6) à la piste de lecture suivante (7) est réalisée si un chevauchement des signaux (9) des deux pistes de lecture (6, 7) est établi.

3. Procédé selon la revendication 1 ou 2, **caractérisé en ce que**, l'information décodée est contrôlée par la formation d'une somme de contrôle, **en ce que**, en cas de non-concordance, une piste de lecture (5, 6, 7 ou 8) adjacente est recherchée et **en ce que**, si le résultat ne donne pas une somme de contrôle correcte, la recherche d'un nouvel identifiant de début commence, la recherche commençant à l'endroit où se trouve le début du dernier identifiant supposé.

4. Procédé selon l'une quelconque des revendications précédentes, **caractérisé en ce que** le nombre de signaux (9) devant être analysés pour le code à barres (1) est déterminé par l'enregistrement d'un identifiant de fin.

5. Procédé selon l'une quelconque des revendications 1 à 3, **caractérisé en ce que** le nombre de signaux (9) devant être analysés pour le code à barres (1) est déterminé par le décodage d'un nombre prédéfini de chiffres.

6. Procédé selon l'une quelconque des revendications précédentes, **caractérisé en ce que** le système à tranches de temps est redéfini à chaque fois en même temps que l'enregistrement de l'identifiant de début, le système à tranches de temps dépendant de la vitesse de balayage du code à barres (1).

7. Procédé selon l'une quelconque des revendications précédentes, **caractérisé en ce que** l'analyse reconstitue le code à barres (1) complet à l'aide du calculateur (4) et filtre les informations marginales telles que des lettres et des images qui se trouvent à côté ou avant le code à barres (1).
